# EUROPÄISCHE PATENTSCHRIFT

(11) **EP 2 241 747 B1**
(45) Veröffentlichungstag und Bekanntmachung des Hinweises auf die Patenterteilung: **15.08.2018**
(21) Anmeldenummer: 10153262.0
(22) Anmeldetag: 11.02.2010
(51) Int. Cl.: F02N 11/04, F02N 15/08, F02B 67/06

(54) **Riemengetriebener Starter-Generator-Trieb**
Belt-operated starter-generator drive
Transmission de générateur-démarreur entraîné par une courroie

(30) Priorität: 15.04.2009 DE 102009003784
(43) Veröffentlichungstag der Anmeldung: 20.10.2010
(73) Patentinhaber: ContiTech Antriebssysteme GmbH, 30165 Hannover (DE)
(72) Erfinder: Kautz, Andreas, 30453, Hannover (DE)
(74) Vertreter: Finger, Karsten

(56) Entgegenhaltungen:
- EP-A1- 1 367 696
- DE-A1- 19 941 705
- US-A1- 2006 145 643

## Beschreibung

Die Erfindung betrifft einen riemengetriebenen Starter-Generator-Trieb eines Verbrennungsmotors.

Riemengetriebene Starter-Generator-Triebe von Verbrennungsmotoren sind bekannt. Diese weisen eine Triebebene aus einer mit der Kurbelwelle verbundenen Kurbelwellenscheibe und mit einer mit dem Generator verbundenen Generatorscheibe und üblicherweise mit wenigstens einer mit einem weiteren Nebenaggregat verbundenen Nebenaggregatscheibe auf, wobei die Scheiben über einen Riemen miteinander verbunden sind. Über Nebenaggregatscheiben mitversorgte Nebenaggregate sind beispielsweise Servolenkung, Wasserpumpe und Klimaanlage. Um ein leises Laufgeräusch im Betrieb dieses Triebes zu erhalten, wird ein reibschlüssiger Keilrippenriemen zum Verbinden der Scheiben dieses Systems eingesetzt.

Ein Starter-Generator vereint die Funktion von Motor-Start und Lichtmaschine/Generator in einer einzigen elektrischen Maschine. Der Starter-Generator kann damit sowohl den Verbrennungsmotor eines Kraftfahrzeuges starten oder beschleunigen (Starter) als auch bei laufendem Motor elektrischen Strom erzeugen (Lichtmaschine/Generator).

Der Starter-Generator-Trieb des Standes der Technik besitzt jedoch eine Reihe von Nachteilen. So erfordert die Doppelfunktion des Startens und des Stromerzeugens eine Kompromissauslegung des Triebes, die zu einem schlechteren Gesamtwirkungsgrad führt.
Für den Startvorgang ist eine hohe Riemenvorspannung des kraftschlüssigen Keilrippenriemens für die beim Startvorgang wirkenden hohen Drehmomente notwendig, die im Normalbetrieb des Systems wesentlich geringer sind. Somit müssen aufwendige Spannereinbindungen im kraftschlüssigen Riementrieb angeordnet sein, um diesen Maximalerfordemissen des Systems beim Startvorgang gerecht zu werden. Zudem ist diese hohe Vorspannung für die CO2-Bilanz des Verbrennungsmotors nachteilig. Nachteilig ist weiterhin, dass beim Wechsel zwischen Start- und Generatorbetrieb ein Trumwechsel des Riemens erfolgt, der ebenfalls besondere Vorkehrungen zur Gewährung der notwendigen Riemenvorspannung im Starterbetrieb erfordert.
Es ist daher die Aufgabe der Erfindung, einen riemengetriebenen Starter-Generator-Trieb für einen Verbrennungsmotor bereitzustellen, bei dem auf aufwendige Spannereinbindungen verzichtet werden kann und bei dem die Vorspannung des kraftschlüssigen Riemens gering gehalten werden kann. Die Dokumente EP 1 367 696 A1 und US 2006/0145643 offenbaren die Nutzung von zwei getrennten Riementrieben als Starter-Generator-Trieb. Die Aufgabe wird gelöst, indem ein zweiter Trieb in einer zweiten Triebebene, welche parallel zur Ebene des ersten Triebes angeordnet ist, vorgesehen ist und dieser zweite Trieb eine Generatorscheibe und eine Kurbelwellenscheibe aufweist, wobei beide Scheiben über einen Riemen miteinander verbunden sind und von denen die Generatorscheibe des zweiten Triebes an die korrespondierende Generatorscheibe des ersten Triebes und die Kurbelwellenscheibe des zweiten Triebes an die korrespondierende Kurbelwellenscheibe des ersten Triebes lösbar über ein Kupplungsmittel kuppelbar ist.

Somit ist mit der erfindungsgemäßen Lösung erreicht, dass für den Startvorgang der zweite Trieb der zweiten Triebebene durch Kupplung an den ersten Trieb kuppelbar ist und die für den Startvorgang hohen Drehmomente erzeugt, so dass in dem ersten Trieb auf aufwendige Spannereinrichtungen, welche nur für den Startbetrieb benötigt werden, verzichtet werden kann. Ebenfalls kann auf Vorkehrungen zur Gewährung der notwendigen Riemenvorspannung aufgrund des Trumwechsels beim Wechsel zwischen Start- und Generatorbetrieb verzichtet werden. Nach dem erfolgten Startvorgang kann der zweite Trieb von dem ersten Trieb entkuppelt werden, so dass nur die erste Triebebene im regulären Generatorbetrieb unter für den Normalbetrieb normalen Vorspannung und somit maximaler Laufruhe arbeitet. Erfindungsgemäß sind die Scheiben der zweiten Triebebene durch einen Zahnriemen miteinander verbunden. Durch den Formschluss des Zahnriemens zwischen Kurbelwellenscheibe und Generatorscheibe ist ein sehr hohes Übertragungsmoment ermöglicht, welches weitgehend verschleiß frei arbeitet. Zweckmäßig kann es sein, in der zweiten Triebebene eine Excenterspannrolle vorzusehen, um den Zahnriementrieb vorzuspannen.
Zweckmäßig ist es, wenn das Kupplungsmittel eine Magnetkupplung oder eine Fliehkraftkupplung ist. Diese können synchron gesteuert werden, evtl. mit einem geringen Zeitversatz beider Schaltzustände betrieben werden, um impulsartigen Verbindungsschluss zwischen Generator und Kurbelwelle zu optimieren.
Die zweite Triebebenen kann vorteilhafterweise zur Antriebsunterstützung des Verbrennungsmotors an die erste Triebebene temporär angekuppelt sein.
Weitere Merkmale, Vorteile und Einzelheiten der Erfindung werden nun anhand der Zeichnungen, die schematische Ausführungsbeispiele darstellen, näher erläutert. Es zeigen die
- Fig.1: einen erfindungsgemäßen Starter-Generator-trieb mit zwei Trieben in zwei Triebebenen
- Fig.2: eine Aufsicht auf den Starter-Generator-Trieb der Fig.1.

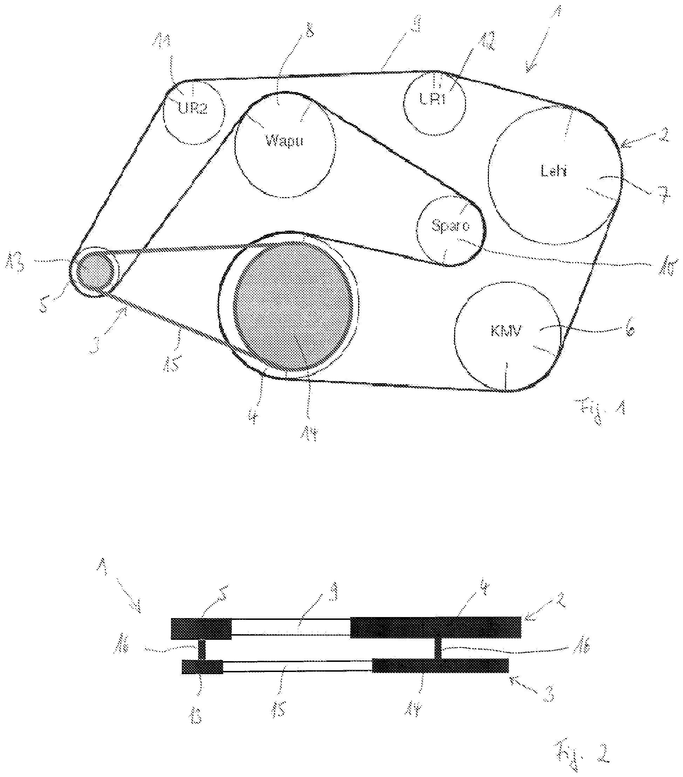

Die **Fig.1** zeigt eine Frontansicht eines erfindungsgemäßen riemengetriebenen Starter-Generator-Triebes 1 eines Verbrennungsmotors mit zwei Trieben 2, 3. Die beiden Triebe 2, 3 sind jeweils in getrennten Triebebenen angeordnet, wobei beide Triebebenen parallel zueinander angeordnet sind und durch lösbare Kupplungen miteinander kuppelbar sind.
Der Trieb 2 des Starter-Generator-Systems 1 ist ein Keilrippenriementrieb aus einer mit der Kurbelwelle (nicht dargestellt) verbundenen Kurbelwellenscheibe 4 und mit einer mit dem Generator (nicht dargestellt) verbundenen Generatorscheibe 5 und mit weiteren Nebenaggregaten (nicht dargestellt) verbundenen Nebenaggregatscheiben 6, 7, 8 für beispielsweise Wasserpumpe, Klimaanlage und Lenkhilfe, wobei die Scheiben 4, 5, 6, 7, 8 über einen reibschlüssigen Keilrippenriemen 9 miteinander verbunden sind. Zudem sind für die für den Normalbetrieb des Generatorbetriebes des Triebes 1 erforderlichen Vorspannung des Keilrippenriemens 9 eine Spannrolle 10 und zwei Umlenkrollen 11, 12 angeordnet.

Der zweite Trieb 3, welcher in der Zeichnungsebene parallel vor dem ersten Trieb 2 angeordnet ist, weist eine Generatorscheibe 13 und eine Kurbelwellenscheibe 14 auf, wobei die Scheiben 13, 14 über einen formschlüssigen Zahnriemen 15 miteinander verbunden sind. Die Generatorscheibe 13 des zweiten Triebes 3 ist an die korrespondierende Generatorscheibe 5 des ersten Triebes 2 und die Kurbelwellenscheibe 14 des zweiten Triebes 3 ist an die korrespondierende Kurbelwellenscheibe 4 des ersten Triebes 2 lösbar über ein Kupplungsmittel 16 kuppelbar.

Die **Fig.2** zeigt eine Aufsicht auf das Starter-Generator-System der Fig.1, wobei die weiteren Nebenaggregatscheiben und die Spannrolle und die Umlenkrollen nicht dargestellt sind. Die Bezugszeichen der Bauteile der Fig.1 sind für die gleichen Bauteile der Fig.2 beibehalten.

Für die Start-Funktion des Verbrennungsmotors oder für eine Antriebsunterstützung (Boostfunktion) ist der zweite Trieb 3 mit dem ersten Trieb 2 kuppelbar und ermöglicht über die Auslegung dieses zweiten Zahnriementriebes 3 die Übertragung der für den Start notwendigen hohen Drehmomente. Hierdurch kann der Trieb 1, der Keilrippenriementrieb, für den Generatorbetrieb ausgelegt sein und auf eine hohe Vorspannung des Keilrippenriemens, welche für einen Startbetrieb erforderlich wäre, kann vorteilhafterweise verzichtet werden. Nach dem Startbetrieb können die Kupplungen 16 geöffnet werden, so dass der zweite Trieb vom ersten Trieb entkuppelt ist und der Trieb 1 im Generatorbetrieb unter maximaler Laufruhe und unter vorteilhafter CO2-Bilanz des Keilrippenriemens 9 läuft.

### Bezugszeichen

- 1: Starter-Generator-Trieb
- 2: erster Trieb
- 3: zweiter Trieb
- 4: Kurbelwellenscheibe
- 5: Generatorscheibe
- 6: Nebenaggregatscheibe
- 7: Nebenaggregatscheibe
- 8: Nebenaggregatscheibe
- 9: Keilrippenriemen
- 10: Spannrolle
- 11: Umlenkrolle
- 12: Umlenkrolle
- 13: Generatorscheibe
- 14: Kurbelwellenscheibe
- 15: Zahnriemen
- 16: Kupplungsmittel

## Patentansprüche

1. Riemengetriebener Starter-Generator-Trieb (1) eines Verbrennungsmotors
mit einem **ersten** Trieb (2) in einer ersten Triebebene aus einer mit der Kurbelwelle verbundenen Kurbelwellenscheibe (4) und mit einer mit dem Generator verbundenen Generatorscheibe (5) und wenigstens einer mit einem weiteren Nebenaggregat verbundenen Nebenaggregatscheibe (6,7,8), wobei die Scheiben (4,5,6,7,8) über einen Riemen (9) miteinander verbunden sind
und einem zweiten Trieb (3) in einer zweiten Triebebene, welche parallel zur ersten Triebebene angeordnet ist und eine Generatorscheibe (13) und eine Kurbelwellenscheibe (14) aufweist, wobei die Scheiben (13,14) über einen Riemen (15) miteinander verbunden sind und die Generatorscheibe (13) des zweiten Triebes (3) an die Generatorscheibe (5) des ersten Triebes (2) und die Kurbelwellenscheibe (14) des zweiten Triebes (3) an die Kurbelwellenscheibe (4) des ersten Triebes (2) lösbar über Kupplungsmittel (6) kuppelbar ist,
**dadurch gekennzeichnet, dass der Riemen (9) des ersten Triebes (2) ein Keilrippenriemen ist und dass der Riemen (15) des zweiten Triebes (3) ein Zahnriemen ist.**

2. Starter-Generator-Trieb nach Anspruch 1,
**dadurch gekennzeichnet, dass** das Kupplungsmittel 16) eine Magnetkupplung oder eine Fliehkraftkupplung oder eine Hydraulikkupplung ist.

3. Starter-Generator-Trieb nach einem oder mehreren der vorangehenden Ansprüche,
**dadurch gekennzeichnet, dass** der zweite Trieb (3) während des Startvorganges des Verbrennungsmotors an den ersten Trieb (2) angekuppelt ist.

4. Starter-Generator-Trieb nach einem oder mehreren der vorangehenden Ansprüche,
**dadurch gekennzeichnet, dass** der zweite Trieb (3) zur Antriebsunterstützung des Verbrennungsmotors an den ersten Trieb (2) angekuppelt ist.

## Claims

1. Belt-driven starter-generator drive (1) of an internal combustion engine,
having a first drive (2) in a first drive plane, composed of a crankshaft pulley (4) connected to a crankshaft and a generator pulley (5) connected to the generator and at least one auxiliary assembly pulley (6, 7, 8) connected to a further auxiliary assembly, wherein the pulleys (4, 5, 6, 7, 8) are connected to one another by means of a belt (9), and having a second drive (3) in a second drive plane which is arranged parallel to the first drive plane and which has a generator pulley (13) and a crankshaft pulley (14), wherein the pulleys (13, 14) are connected to one another means of a belt (15),
and the generator pulley (13) of the second drive (3) is detachably couplable to the generator pulley (5) of the first drive (2), and the crankshaft pulley (14) of the second drive (3) is detachably couplable to the crankshaft pulley (4) of the first drive (2), by coupling means (6),
**characterized in that** the belt (9) of the first drive (2) is a poly-V belt, and **in that** the belt (15) of the second drive (3) is a toothed belt.

2. Starter-generator drive according to Claim 1, **characterized in that** the coupling means (16) is a magnetic coupling or a centrifugal coupling or a hydraulic coupling.

3. Starter-generator drive according to one or more of the preceding claims,
**characterized in that** the second drive (3) is coupled to the first drive (2) during the starting process of the internal combustion engine.

4. Starter-generator drive according to one or more of the preceding claims,
**characterized in that** the second drive (3) is coupled to the first drive (2) for the purposes of drive assistance for the internal combustion engine.

## Revendications

1. Entraînement de générateur-démarreur (1) entraîné par une courroie, pour un moteur à combustion interne,
comprenant un premier entraînement (2) dans un premier plan d'entraînement, constitué d'un disque de vilebrequin (4) connecté au vilebrequin et d'un disque de générateur (5) connecté au générateur et d'au moins un disque de groupe motopropulseur (6, 7, 8) connecté à un groupe auxiliaire supplémentaire, les disques (4, 5, 6, 7, 8) étant connectés les uns aux autres par le biais d'une courroie (9),
et comprenant un deuxième entraînement (3) dans un deuxième plan d'entraînement, lequel est disposé parallèlement au premier plan d'entraînement et présente un disque de générateur (13) et un disque de vilebrequin (14), les disques (13, 14) étant connectés l'un à l'autre par le biais d'une courroie (15),
et le disque de générateur (13) du deuxième entraînement (3) pouvant être accouplé au disque de générateur (5) du premier entraînement (2) et le disque de vilebrequin (14) du deuxième entraînement (3) pouvant être accouplé au disque de vilebrequin (4) du premier entraînement (2) de manière détachable par le biais du moyen d'accouplement (6),
**caractérisé en ce que** la courroie (9) du premier entraînement (2) est une courroie à nervures en V et **en ce que** la courroie (15) du deuxième entraînement (3) est une courroie dentée.

2. Entraînement de générateur-démarreur selon la revendication 1,
**caractérisé en ce que** le moyen d'accouplement (16) est un accouplement magnétique ou un accouplement à force centrifuge ou un accouplement hydraulique.

3. Entraînement de générateur-démarreur selon l'une quelconque ou plusieurs des revendications précédentes, **caractérisé en ce que** le deuxième entraînement (3) est accouplé au premier entraînement (2) pendant l'opération de démarrage du moteur à combustion interne.

4. Entraînement de générateur-démarreur selon l'une quelconque ou plusieurs des revendications précédentes,
**caractérisé en ce que** le deuxième entraînement (3) est accouplé au premier entraînement (2) pour l'assistance à l'entraînement du moteur à combustion interne.
